# EUROPEAN PATENT APPLICATION

(11) **EP 2 096 771 A2**
(43) Date of publication of application: **02.09.2009**
(21) Application number: 09153043.6
(22) Date of filing: 17.02.2009
(51) Int. Cl.: H04B 7/185

(54) **Communication system using an aircraft as a relay**

(30) Priority: 29.02.2008 US 32666 P; 07.05.2008 US 151529
(71) Applicant: Delphi Technologies, Inc., Troy, Michigan 48007 (US)
(72) Inventor: Dobosz, Paul J., Noblesville, IN 46060-9753 (US)
(74) Representative: Denton, Michael John

(57) **Abstract**

A communications system (10) and method (100) thereof is provided, wherein the system (10) includes at least one transmitter configured to transmit (12) at least one signal, and at least one receiver (14) configured to receive at least one of the at least one transmitted signal. The communications system (10) further includes at least one communication device (16) configured to receive and retransmit the at least one transmittal signal, wherein the at least one communication device (16) is mobile and operates at an altitude in a range of approximately 1,000 feet to 65,000 feet with respect to the Earth's surface (18).

## Description

### Technical Field

The present invention generally relates to a communications system, and more particularly, to a communications system with a communication device on an aircraft that receives and retransmits a signal.

### Background of the Disclosure

Generally, there are a limited number of available frequencies for wirelessly transmitting data, and thus, the frequency bandwidths that are available for communication purposes are also limited. One exemplary way of wirelessly transmitting data is the use of satellites, wherein the satellites typically receive and retransmit data. Exemplary types of satellites can include satellites having geostationary orbits (GEOs), highly elliptical orbits (HEOs), low Earth orbits (LEOs), which provide a service to a particular geographical area on the Earth. Thus, data can be transmitted from a position on the Earth, wherein the data is received and retransmitted by the satellite, and the retransmitted data is received by another device in a particular geographical area on the Earth based upon the satellite's orbital position.

Generally, terrestrial repeaters can be used to supplement satellite transmissions, which receive and retransmit the transmitted data using a radio frequency (RF) signal. Typically, the terrestrial repeaters are used to retransmit data, such that the data can be received in gaps where data retransmitted by the satellite cannot be received. Generally, the satellite transmissions require a given amount of bandwidth and the terrestrial repeaters require additional non-overlapping bandwidth in order to deliver the service information. The amount of bandwidth typically required can be dependent upon the type of service information that is being broadcast.

Typically, the satellites used for broadcasting audio and video content via satellite are expensive to develop, manufacture, and launch into orbit. It can also be difficult and expensive to upgrade or fix hardware on the satellite once the satellite is in orbit. Further, it can be expensive and difficult due to governmental regulations to develop a terrestrial repeater infrastructure to provide geographical locations with the transmitted data, which cannot otherwise receive the data via the satellite as the satellite travels through the orbital path.

### Summary of the Invention

According to one aspect of the present invention, a communications system is provided that includes at least one transmitter configured to transmit at least one signal, at least one receiver configured to receive at least one of the at least one transmitted signal, and at least one communication device configured to receive and retransmit the at least one transmittal signal, wherein the at least one communication device is mobile and operates at an altitude in the range of approximately 1,000 feet to 65,000 feet above Earth's surface.

According to another aspect of the present invention, a communications system is provided that includes at least one transmitter configured to transmit at least one signal, at least one receiver configured to receive the at least one transmitted signal, and a plurality of aircraft that are mobile and include at least one communication device configured to receive and retransmit the at least one transmitted signal, wherein the plurality of aircraft include at least one of a passenger aircraft and a cargo aircraft. The communications system further includes a controller configured to monitor a flight path of at least a portion of the plurality of aircraft, wherein the controller selects at least one communication device as an active communication device based upon the monitored flight path, such that the selected active communication device receives and retransmits the at least one transmitted signal.

According to yet another aspect of the present invention, a method of communicating signals using an aircraft is provided that includes the steps of transmitting at least one signal, and receiving the at least one transmitted signal by at least one communication device when the at least one communication device is at an altitude in the range of approximately 1,000 feet to 65,000 feet above Earth's surface. The method further includes the steps of retransmitting the received signal by the at least one communication device, and receiving the retransmitted signal.

These and other features, advantages, and objects of the present invention will be further understood and appreciated by those skilled in the art by reference to the following specification, claims, and appended drawings.

### Brief Description of the Drawings

The present invention will now be described, by way of example, with reference to the accompanying drawings, in which:
Fig. 1 is an environmental view of a communications system, in accordance with one embodiment of the present invention;
Fig. 2 is another environmental view of the communications system, in accordance with one embodiment of the present invention;
Fig. 3 is a block diagram of the communications system, in accordance with one embodiment of the present invention; and
Fig. 4 is a flow chart illustrating a method of communicating signals using an aircraft in the communications system, in accordance with one embodiment of the present invention.

### Description of Preferred Embodiments

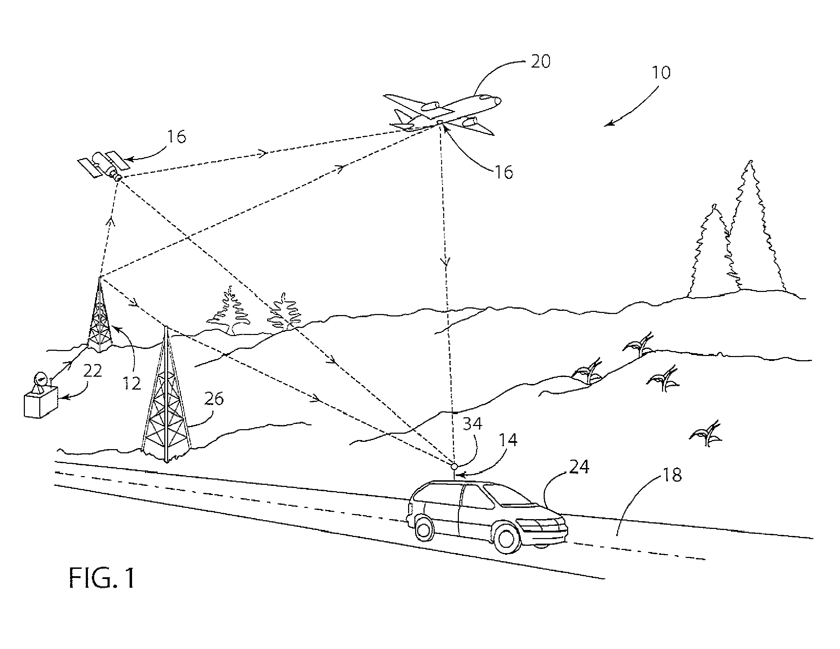

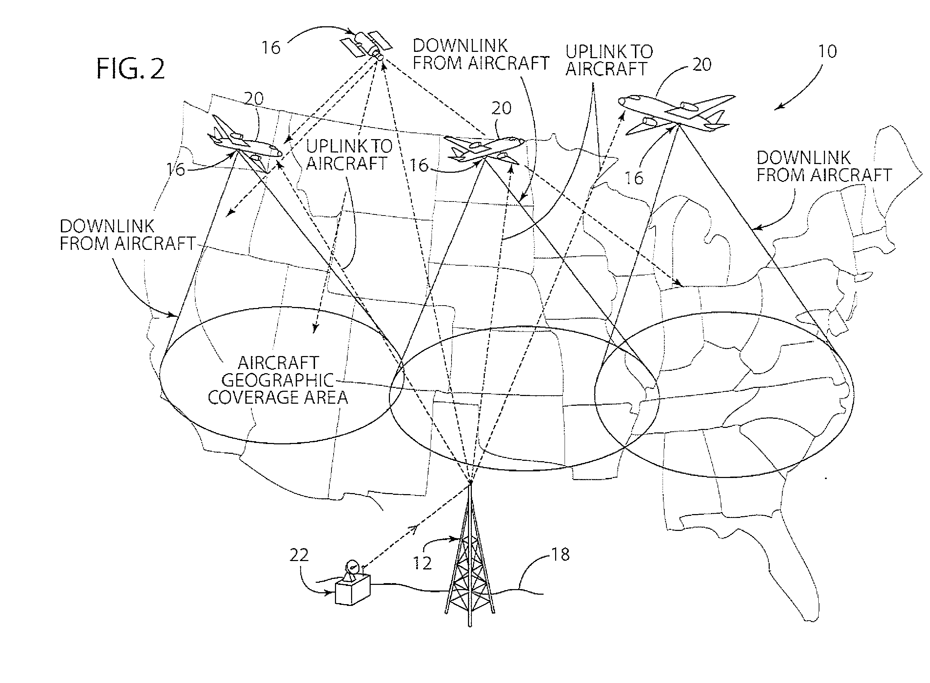

In regards to Figs. 1-3, a communications system is generally shown at reference identifier 10. The communications system 10 includes at least one transmitter generally indicated at 12, which is configured to transmit at least one signal. Further, the communications system 10 includes at least one receiver generally indicated at 14 that is configured to receive the at least one transmitted signal. The communications system 10 also includes at least one communication device generally indicated at 16, which is configured to receive and retransmit the at least one transmitted signal, wherein the communication device 16 is mobile and operates at an altitude in the range of approximately 1,000 feet to 65,000 feet above Earth's surface 18, as described in greater detail herein.

The communication device 16 is integrated with an aircraft 20, which generally operates at an altitude ranging up to approximately 65,000 feet with respect to the Earth's surface 18. According to one embodiment, the communication device 16 is selected as active, when the aircraft 20 that includes the active communication device 16 is at an altitude of approximately 20,000 feet to 50,000 feet above Earth's surface 18. According to such an exemplary embodiment, the signal retransmitted by a plurality of communication devices 16 can provide coverage to the receiver 14 across the continental United States by having approximately thirty (30) communication devices 16 on separate and adequately spaced aircraft 20. It should be appreciated by those skilled in the art that the amount of active communication devices 16 can be greater or less based upon the desired geographical coverage area, the flight paths of the aircraft 20, or other operating conditions of the communications system 10. For purposes of explanation and not limitation, approximately sixty (60) communication devices 16 when active can provide coverage across the continental United States based upon the flight path of the aircraft 20.

According to one embodiment, the aircraft 20 is at least one of a passenger airliner and a cargo airliner. According to such an embodiment, a passenger airliner can be a commercial passenger airliner, a private passenger airliner, a military passenger airliner, a governmental passenger airliner, the like, or a combination thereof, wherein the passenger airliner includes a flight crew and passengers, along with minimal, if any, freight cargo. Similarly, in such an embodiment, the cargo airliner can be a commercial cargo airliner, a private cargo airliner, a military cargo airliner, a governmental cargo airliner, the like, or a combination thereof, wherein the cargo airliner includes a flight crew and freight cargo, along with minimal, if any, passengers, with respect to the amount of freight cargo being transported. Thus, the communication device 16 is integrated with the aircraft 20, wherein making the communication device 16 mobile and locating the communication device 16 in a designated area is not the main objective of the aircraft 20 (i.e., the aircraft 20 is primarily intended for transporting passengers or cargo).

The communications system 10 also includes a controller generally indicated at 22, which monitors a flight path of the communication device 16, and thus, the aircraft 20. Typically, the controller 22 selects at least one active communication device 16, wherein the active communication device 16 receives and retransmits the transmitted signal based upon the monitored and scheduled flight path of the aircraft 20. According to one embodiment, the controller 22 is part of or communicates with the air traffic control system that is used to monitor aircraft during flight, and includes hardware, such as a processor 21 and a memory storage device 23 that includes one or more executable software routines, for determining which communication devices 16 should be active or inactive.

The communication device 16 can further be configured to receive and process the at least one transmitted signal, according to one embodiment. Thus, the communication device, whether active or inactive, can receive the transmitted signal from the transmitter 12. Once the communication device 16 receives the signal from the transmitter 12, the communication device 16 processes the received signal to produce an output that is broadcast in the aircraft 20 based upon the transmitted signal. The broadcasted output can be an audio output, a video output, or a combination thereof. It should be appreciated by those skilled in the art that the received signal that is processed to broadcast the output in the aircraft 20 can be communicated from the communication device 16 to other desirable components or devices in the aircraft 20 by wire transmission, fiberoptics transmission, the like, or a combination thereof.

According to one embodiment, the receiver 14 is integrated with a vehicle 24. Thus, when the signal is transmitted by the transmitter and received and retransmitted by the communication device 16, the receiver 14 can receive the retransmitted signal and broadcast an output. The broadcasted output can be an audio output, a video output, or a combination thereof. It should be appreciated by those skilled in the art that the receiver 14 can be a mobile or non-mobile receiver, such that the receiver 14 can be a handheld mobile device, integrated with other mobile devices, or a stationary receiver, such as a receiver in a user's dwelling.

Additionally, the communications system 10 can include at least one terrestrial repeater 26 and at least one satellite 28. Thus, the terrestrial repeater 26 can receive a signal from the transmitter 12 and retransmit the signal so that the receiver 14 can receive the data contained in the signal when the receiver 14 is positioned to receive a radio frequency (RF) signal, rather than the signal being retransmitted by the communication device 16 and the satellite 28. Additionally, the satellite 28 can be used to retransmit the signal received from the transmitter 12. Thus, the satellite 28 can be used, such that the active communication devices 16 supplement the coverage area of the satellite 28, or the satellite 28 supplements the coverage area of the active communication devices 16.

According to one embodiment, the communication device 16 receives the signal directly from the transmitter 12. According to an alternate embodiment, the transmitter 12 transmits the signal to the satellite 28, which receives and retransmits the signal, wherein the retransmitted signal is received by the communication device 16, and can again be retransmitted. In such an embodiment, the controller 22 can select the communication device 16 to be active or inactive via the transmitter 12 and the satellite 28, or via the transmitter 12 only.

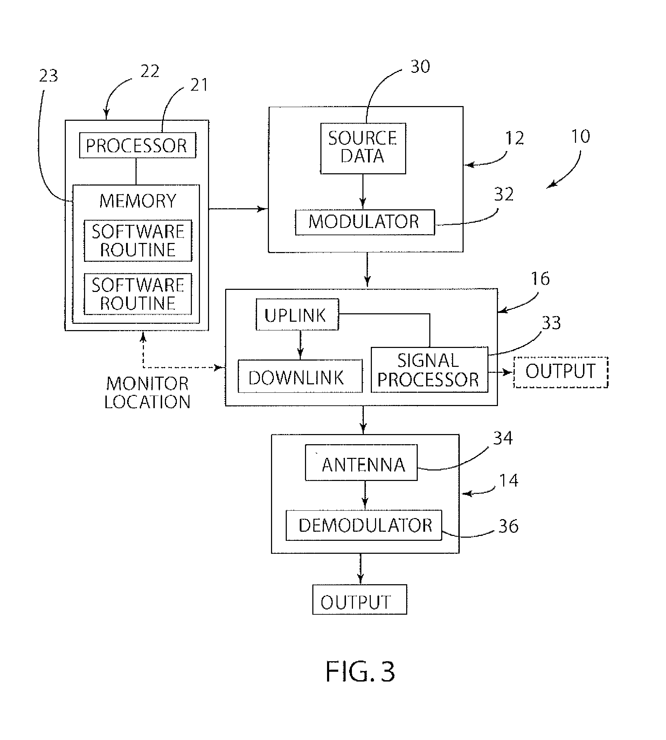

In regards to Fig. 3, the transmitter 12 can include source data 30, which is contained in the transmitted signal and is the content of the broadcasted output. The transmitter 12 can modulate the source data 30 using a modulator 32 in order to facilitate the transmission of the signal. The signal is then transmitted from the transmitter 12 and received or uplinked by the communication device 16. According to one embodiment, the communication device 16 can process the signal using a signal processor 33, and broadcast an output based upon the received signal from the transmitter 12. Additionally, the communication device 16 downlinks the signal, which is received by the receiver 14. The receiver 14 can include at least one antenna 34 configured to receive the signal, and a demodulator 36 configured to demodulate the received signal. Thus, the receiver 14 can emit an output based upon the signal transmitted by the transmitter 12 (i.e., the source data 30).

According to one embodiment, the communication system 10 includes hardware circuiting, one or more executable software routine, or a combination thereof to modulate, encode, interleave, the like, or a combination thereof the signal transmitted from the transmitter 12 and received by the receiver 14. By way of explanation and not limitation, the signal can be formed or modulated as in a signal in a Digital Video Broadcasting-Satellite service to Handheld (DVB-SH) system, a Digital Satellite Broadcast (DSB) system, a Satellite Digital Audio Radio (SDAR) system, a MediaFLO (Forward Link Only) system, or the like. Exemplary systems and methods are U.S. Patent Application Publication No. 2007/0195868 entitled, "METHOD TO INCREASE PERFORMANCE OF SECONDARY DATA IN A HIERARCHAL MODULATION SCHEME," and U.S. Patent Application Publication No. 2005/0025089 entitled, "METHOD TO RECEIVE LOCAL INFORMATION WITH A NATIONAL BROADCAST SERVICE," which the entire disclosures are hereby incorporated herein by reference

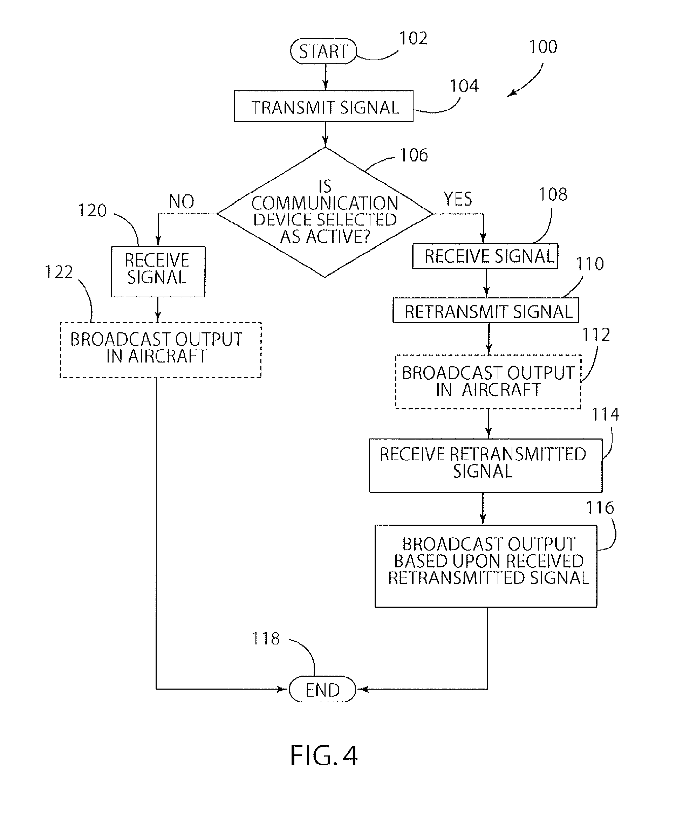

With respect to Figs. 1-4, a method of communicating a signal using the aircraft 20 is generally shown in Fig. 4 at 100. The method 100 starts at step 102, and proceeds to step 104, wherein the signal is transmitted. At decision step 106, it is determined if the communication device 16 is selected as active. Typically, the controller 22 selects at least one communication device 16 to be active based upon the location and flight path of the aircraft 20.

If it is determined at decision step 106 that the communication device 16 is selected as active, then the method 100 proceeds to step 108, wherein the signal is received by the communication device 16. At step 110, the communication device 16 retransmits the signal. According to one embodiment, at step 112, an output can be broadcast in the aircraft 20 based upon the received transmitted signal. The method 100 then proceeds to step 114, wherein the retransmitted signal is received by the receiver 14. The receiver 14 then broadcasts an output based upon the received retransmitted signal at step 116, and the method 100 then ends at step 118.

However, if it is determined at decision step 106 that the communication device is not selected as active, then the method 100 proceeds to step 120, wherein the communication device 16 receives the signal. According to one embodiment, the inactive communication device 16 can broadcast an output in the aircraft 20 based upon the received signal at step 122. The method 100 then ends at step 118. It should be appreciated by those skilled in the art that if it is determined at decision step 106 that the communication device 16 is inactive, the inactive communication device 16 does not need to receive the signal if it is not desired to broadcast an output on the aircraft 20, and the method ends at step 118.

Advantageously, the communications system 10 and method 100 use existing aircraft infrastructure (i.e., the aircraft 20 and the air traffic control system) to receive and retransmit the signal from the transmitter 12 with the addition of the communication device 16 on the aircraft 20. Further, the signal transmitted by the transmitter 12 can be processed by the communication device 16 to provide real-time programming to the passengers on the aircraft 20. Additionally, the communication device 16 is recoverable, since it remains on the aircraft 20, and is easily accessible for maintenance and upgrading when the aircraft 20 is not in use. It should be appreciated by those skilled in the art that additional or alternative advantages may exist based upon the communications system 10 and method 100. Additionally, it should be appreciated by those skilled in the art that the above devices in the communications system 10 and method 100 can be used in other combinations not explicitly stated herein.

The above description is considered that of preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A communications system (10) comprising:
at least one transmitter (12) configured to transmit at least one signal;
at least one receiver (14) configured to receive at least one of said at least one transmitted signal; and
at least one communication device (16) configured to receive and retransmit said at least one transmittal signal, wherein said at least one communication device (16) is mobile and operates at an altitude in a range of approximately 1,000 feet to 65,000 feet with respect to Earth's surface (18).

2. The communications system (10) of claim 1, wherein said at least one communication device (16) is integrated with at least one aircraft (20).

3. The communications system (10) of claim 1 or 2 further comprising a controller (22) that monitors a flight path of said at least one communication device (16), wherein said controller (22) selects at least one active communication device of said at least one communication device that receives and retransmits said at least one transmitted signal based upon said flight path of said at least one active communication device (16).

4. The communications system (10) according to anyone of claims 1 to 3, wherein said communication device (16) can further be configured to receive and process said at least one transmitted signal, such that an output is broadcast by said communication device (16) based upon said at least one received transmitted signal.

5. The communications system (10) of claim 4, wherein said at least one communication device (16) comprises:
an active communication device that receives and retransmits said at least one transmitted signal; and
a inactive communication device that receives said at least one transmitted signal, wherein both said active and inactive communication devices receive and broadcast an output based upon said at least one received signal.

6. The communications system (10) according to anyone of claims 1 to 5, wherein said communication device (16) is mobile at an altitude in a range of approximately 20,000 feet to 50,000 feet with respect to said Earth's surface (18).

7. The communications system (10) according to anyone of claims 1 to 6, further comprising a plurality of aircraft (20) that are mobile and comprise at least one communication device (16) configured to receive and retransmit said at least one transmitted signal, wherein said plurality of aircraft (20) comprise at least one of a passenger aircraft and a cargo aircraft; and wherein said controller (22) is configured to monitor a flight path of at least a portion of said plurality of aircraft (20), wherein said controller (22) selects at least one communication device as an active communication device based upon said monitored flight path, such that said selected active communication device receives and retransmits said at least one transmitted signal.

8. The communications system (10) of claim 7, wherein said controller (22) selects said at least one communication device (16) as active, such that said at least one active communication device receives and retransmits said transmitted signal when an aircraft of said plurality of aircraft (20) is at an altitude in a range of approximately 20,000 feet to 50,000 with respect to Earth's surface.

9. The communications system (10) of claim 7 or 8, wherein said communication device (16) is further configured to receive and process said at least one transmitted signal, such that an output based upon said received said at least one transmitted signal is broadcast on said aircraft (20) by said communication device (16).

10. The communications system (10) of claim 9, wherein said at least one communication device (16) comprises:
an active communication device that is selected by said controller (22), wherein said active communication device receives and retransmits said at least one transmitted signal; and
an inactive communication device, wherein both said active and inactive communication devices receive and process said at least one transmitted signal to broadcast an output on said aircraft (20) based upon said at least one received transmitted signal.

11. The communications system (10) according to anyone of claims 1 to 10, wherein said receiver (14) is integrated with at least one of a vehicle (24) and a stationary receiver.

12. The communications system (10) according to anyone of claims 1 to 11 further comprising at least one of a terrestrial repeater (26) and a satellite (28) configured to receive and retransmit said at least one transmitted signal.

13. A method (100) of communicating signals using an aircraft (20), said method comprising the steps of:
Transmitting (104) at least one signal;
Receiving (108, 120) said at least one transmitted signal by at least one communication device (16) when said at least one communication device (16) is at an altitude in a range of approximately 1,000 feet to 65,000 feet with respect to Earth's surface (18);
Retransmitting (110) said received signal; and
Receiving (114) said retransmitted signal.

14. The method (100) of claim 13 further comprising the step of selecting at least one communication device (16) as an active communication device and at least one communication device as an inactive communication device, wherein said active communication device receives and retransmits said transmitted signal.

15. The method (100) of claim 13 or 14 further comprising the steps of receiving and processing said at least one transmitted signal by said at least one communication device (16), such that an output is broadcast in an aircraft (20) by said at least one communication device (16) based upon said received at least one transmitted signal.
